# EUROPÄISCHE PATENTSCHRIFT

(11) **EP 4 075 043 B1**
(45) Veröffentlichungstag und Bekanntmachung des Hinweises auf die Patenterteilung: **12.07.2023**
(21) Anmeldenummer: 22162737.5
(22) Anmeldetag: 17.03.2022
(51) Int. Cl.: F16L 27/08, F16L 17/025, F16L 17/06

(54) **ROHRVERBINDUNGSVORRICHTUNG**
PIPE CONNECTION DEVICE
DISPOSITIF RACCORD TUBULAIRE

(30) Priorität: 14.04.2021 DE 202021102003 U
(43) Veröffentlichungstag der Anmeldung: 19.10.2022
(73) Patentinhaber: SVT GmbH, 58332 Schwelm (DE)
(72) Erfinder: Raisig, Paul, 44869 Bochum (DE)
(74) Vertreter: dompatent von Kreisler Selting Werner - Partnerschaft von Patent- und Rechtsanwälten mbB

(56) Entgegenhaltungen:
- CN-U- 203 099 163
- DE-A1- 2 907 246
- DE-A1- 3 324 630
- DE-A1-102011 018 213

## Beschreibung

Die Erfindung betrifft eine Rohrverbindungvorrichtung zur Verbindung von Rohren. Die Rohrverbindungsvorrichtung ist insbesondere für den Umschlag von Tieftemperatur-Flüssigkeiten geeignet.

Beim Transport von Tieftemperatur-Flüssigkeiten werden an Rohrverbindungsvorrichtungen, insbesondere gelenkige Rohrverbindungsvorrichtungen, hohe Anforderungen gestellt. Bei Tieftemperatur-Flüssigkeiten handelt es sich beispielsweise um Flüssiggas, das bei Temperaturen von insbesondere weniger als -150° C umgeschlagen wird. Beispielsweise wird LNG bei einer Temperatur von ca. -164° C verladen. Neben starren Rohrverbindungen gibt es auch Anwendungsfälle, in denen insbesondere aufgrund des Auftretens von Relativbewegungen gelenkige Rohrverbindungen erforderlich sind. Dies ist beispielsweise der Fall, wenn Flüssiggas an einer Verladestation in einen Tank eines Schiffs gepumpt wird, da zwischen der Ladestation und dem Schiff stets eine Relativbewegung stattfindet.

Bekannte gelenkige Rohrverbindungsvorrichtungen weisen zwei Verbindungselemente zum Verbinden mit jeweils einem Rohrende auf. Diese Verbindungselemente weisen insbesondere einen runden Innenquerschnitt auf, in den die Rohrenden eingesteckt und fixiert werden. Die beiden Verbindungselemente sind jeweils mit einem Lagerelement verbunden. Die Verbindung kann hierbei über Flansche erfolgen, die beispielsweise an den Verbindungselementen vorgesehen sind. Die Verbindung selbst kann sodann über Schraubverbindungen oder dergleichen erfolgen. Die beiden Lagerelemente überdecken sich zumindest teilweise in Längsrichtung, d.h. in Förderrichtung der Flüssigkeit. Zwischen den Lagerelementen sind zur Ausbildung der gelenkigen Rohrverbindungsvorrichtung Lager angeordnet. Beispielsweise kann es sich hierbei um in umlaufenden Nuten angeordnete Kugeln handeln. Zur Ausbildung der Kugellaufbahnen können die beiden Lagerschalen jeweils einander gegenüberliegende umlaufende sphärische Nuten aufweisen.

Des Weiteren weist die bekannte Rohrverbindungsvorrichtung ein Innenteil auf, das von den beiden Lagerelementen umgeben ist. Das rohrförmig ausgebildete Innenteil bildet zusammen mit den beiden Verbindungselementen einen, üblicherweise kreiszylindrischen, Innenraum aus. Durch diesen Innenraum wird das Fluid, wie insbesondere verflüssigtes Gas, gefördert. Aufgrund der im Gelenk auftretenden Relativbewegungen ist es erforderlich, Dichtungen vorzusehen. Hierzu ist zwischen dem Innenteil und einem der Verbindungselemente eine umlaufende, in Richtung des Innenraums, offene Nut vorgesehen. In dieser ist eine Primärdichtung angeordnet. Die Primärdichtung kann einen U-förmigen Querschnitt aufweisen, wobei die Öffnung des U's nach innen in Richtung des Innenraums weist. Dieses ist ringförmig ausgebildet. Eine entsprechende Nut mit einer weiteren Primärdichtung ist üblicherweise auch zwischen dem Innenteil und dem zweiten Verbindungselement angeordnet. Ferner ist zwischen dem Innenteil und einem der Verbindungselemente eine umlaufende geschlossene Kammer ausgebildet, in der eine Sekundärdichtung angeordnet ist.

Während des Betriebes kann es vorkommen, dass geringe Mengen an Flüssiggas in die Kammer eindringen, in der die Sekundärdichtung angeordnet ist. Dies ist während des Betriebs im allgemeinen nicht schädlich. Nach dem Betrieb erwärmt sich die gesamte Anordnung wieder auf Umgebungstemperatur. Ein Erwärmen von Flüssiggas, beispielsweise LNG von -164° C auf Raumtemperatur führt dazu, dass sich das Volumen um das 600-fache vergrößert. Dies hat zur Folge, dass bereits bei geringen Mengen an Flüssiggas, das in die Kammer eingedrungen ist, in der die Sekundärdichtung vorhanden ist, dazu führt, dass die Primärdichtung beschädigt werden kann. Insbesondere bei Primärdichtungen mit großem Durchmesser von beispielsweise mehr als 50 mm, insbesondere mehr als 200 mm und besonders bevorzugt mehr als 400 mm, besteht hier ein erhebliches Risiko. Die Dichtungen können ferner nur mit viel Aufwand ausgewechselt werden. Eine bekannte Rohrverbindung zeigt die CN 203 099 163 U.

Aufgabe der Erfindung ist es eine Rohrverbindungsvorrichtung, wie vorstehend beschrieben, zu schaffen, bei der das Risiko des Beschädigens einer Dichtung insbesondere durch expandierendes Gas bei der Erwärmung verringert ist.

Die Lösung der Aufgabe erfolgt erfindungsgemäß durch eine Rohrverbindungsvorrichtung mit den Merkmalen des Anspruchs 1.

Die erfindungsgemäße Rohrverbindungsvorrichtung weist ebenfalls zwei Verbindungselemente zum Verbinden mit jeweils einem Rohrende auf. Ferner sind zwei Lagerelemente vorgesehen, die jeweils mit einem der beiden Verbindungselemente verbunden sind. Die Lagerelemente überdecken sich in Längsrichtung teilweise. Zwischen den Lagerelementen ist ein Lager vorgesehen, das insbesondere Kugeln aufweist. Ferner ist ein von den Lagerelementen umgebenes rohrförmiges Innenteil vorgesehen. Bei dem Innenteil handelt es sich vorzugsweise um ein gesondertes Teil, wobei das Innenteil auch einstückig mit einem, insbesondere dem inneren der beiden Lagerelemente ausgebildet sein kann. Die beiden Verbindungselemente und das Innenteil bilden einen Innenraum aus, durch den das Fluid während des Betriebs strömt. In einer zwischen dem Innenteil und einem der Verbindungselemente vorgesehenen umlaufenden Nut, die in Richtung des Innenraums offen ist, ist eine Primärdichtung angeordnet.

Des Weiteren ist zwischen dem Innenteil und einem der Verbindungselemente eine umlaufende geschlossene Kammer vorgesehen. In dieser Kammer ist die Sekundärdichtung angeordnet. Die Sekundärdichtung ist im Querschnitt vorzugsweise U-förmig ausgebildet. Die Öffnung des U's weist hierbei vorzugsweise nach innen in Richtung des Innenraums.

Erfindungsgemäß ist der Raum zwischen Primär- und Sekunderdichtung, mit einem Überdruckkanal verbunden. Mithilfe einer Druckerzeugungseinrichtung, die mit dem Überdruckkanal verbunden ist, kann an die Nut ein Überdruck angelegt werden, so dass in dem Raum zwischen Primär- und Sekunderdichtung Überdruck herrscht. Der Überdruck ist hierbei höher als der im Innenraum der Rohrverbindungsvorrichtung herrschende Druck. Durch einen derartigen Überdruck kann vermieden werden, dass während des Betriebs Flüssiggas in einen Bereich hinter der Primärdichtung gelangt. Hierdurch ist eine Beschädigung oder gar Zerstörung der Primärdichtung durch die Ausdehnung des Flüssiggases bei Erwärmung vermieden.

Vorzugsweise ist der Überdruckkanal mit einem Nutgrund der Nut verbunden. Der Nutgrund ist derjenige Bereich der Nut, der der Öffnung gegenüberliegt. Insofern ist gewährleistet, dass der Überdruck in besonders bevorzugter Ausführungsform auf einer Außenseite der Primärdichtung anliegt. Die Außenseite der Primärdichtung ist diejenige Seite der Primärdichtung, die vom Innenraum der Rohrverbindungsvorrichtung wegweist. Insofern herrscht an der Außenseite der Primärdichtung ein höherer Druck als an der Innenseite der Primärdichtung, wobei an der Innenseite der Primärdichtung der im Innenraum der Rohrverbindungsvorrichtung herrschende Druck anliegt.

Vorzugsweise ist der Unterdruckkanal in einem der Verbindungselemente angeordnet. Dieser hat insbesondere den Vorteil, dass eine einfache und zuverlässige Verbindung mit der Druckerzeugungseinrichtung, beispielsweise über eine Druckleitung, möglich ist.

In einer besonders bevorzugten Ausführungsform ist die Primärdichtung derart ausgebildet, dass sie sowohl einem hohen Druck auf der Innenseite als auch einem entsprechend hohem Druck auf der Außenseite Stand hält. Insbesondere kann die Primärvorrichtung hierbei derart ausgebildet sein, dass sie einem konstant hohen Druck von außen standhält. Hierbei handelt es sich beispielsweise um einen Druck von mehr als 8 bar. Hierbei ist es besonders bevorzugt, dass die Primärvorrichtung derart ausgebildet ist, dass sie einem an der Außenseite anliegendem Druck von 8 bar auch Stand hält, wenn im Innenraum der Rohrverbindungsvorrichtung Atmosphärendruck herrscht. Bei einer derartigen Dichtung ist es möglich, einen konstant hohen Druck, insbesondere während des Betriebs, d.h. des Transports von Flüssiggas, anzulegen. Ein derart hoher Druck kann in der Ausführungsform der Erfindung unabhängig davon angelegt werden, welcher Druck im Innenraum der Rohrverbindungsvorrichtung herrscht.

Bei einer bevorzugten Weiterbildung der Erfindung ist mit der Druckerzeugungseirichtung eine Steuereinrichtung verbunden. Mithilfe der Steuereinrichtung ist es möglich, den von der Druckerzeugungseinrichtung erzeugten Druck in Abhängigkeit des im Innenraum der Rohverbindungsvorrichtung herrschenden Drucks anzupassen. Beispielsweise kann durch die Steuereinrichtung ein gleichbleibender Überdruck erzeugt werden. Durch die Steuereinrichtung ist beispielsweise sichergestellt, dass die Druckdifferenz zwischen dem Innenraum der Rohrverbindungsvorrichtung und der Außenseite der Primärdichtung nur in einem vorgegebenen Bereich von beispielsweise weniger als 2 bar Überdruck liegt. Auch kann durch die Steuereinrichtung sichergestellt werden, dass die Druckdifferenz stets höher als beispielsweise 0,5 bar ist und beispielsweise in einem Bereich von 0,5 bis 2 bar, insbesondere 0,5 bis 1 bar liegt. Dies hat den Vorteil gegenüber einem konstanten hohen Außendruck, dass die Primärdichtung einfacher und somit kostengünstiger ausgebildet sein kann, da sie nicht dafür ausgebildet sein muss, einen dauerhaft hohen Druck von außen Stand zu halten.

In besonders bevorzugter Ausführungsform weist die Primärdichtung ein äußeres Dichtelement auf. Dieses liegt an Seitenwänden der Nut an. Besonders bevorzugt ist es, dass das äußere Dichtelement im Querschnitt U-förmig ausgebildet ist, wobei die Öffnung der Dichtung in Richtung des Innenraums der Rohrverbindungsvorrichtung weist. Die beiden Seitenelemente des im Querschnitt U-förmigen äußeren Dichtelements liegen vorzugsweise an den Seitenwänden der Nut an. Ferner sind die beiden Seitenelemente über ein Querelement miteinander verbunden. Das Querelement ist am Nutgrund angeordnet, wobei zwischen dem Querelement und dem Nutgrund ein geringer Abstand vorgesehen sein kann. Hierdurch ist zwischen der durch das Querelement ausgebildeten Außenseite der Primärdichtung und dem Nutgrund eine ringförmige Kammer ausgebildet. Diese ringförmige Kammer ist in besonders bevorzugter Ausführungsform mit dem Überdruckkanal verbunden.

Das äußere Dichtelement weist vorzugsweise Polytetrafluoroethylene (PTFE) oder Ultra-High- Molecular-Weight-Polyethylen (UHMW-PE) auf und ist besonders Bevorzugt aus diesem Material hergestellt.

Vorzugsweise weist die Primärdichtung einen Versteifungsring auf. Dieser ist vorzugsweise innerhalb des äußeren Dichtelements angeordnet. Hierbei kann der Versteifungsring in das äußere Dichtelement teilweise oder vollständig eingebettet sein. Vorzugsweise ist der Versteifungsring derart angeordnet, dass er an einer Innenseite des Querelements anliegt. Insbesondere handelt es sich bei dem Versteifungsring um einen umlaufenden geschlossenen Ring.

Der Versteifungsring ist vorzugsweise aus nicht rostendem Stahl.

Des Weiteren ist es bevorzugt, dass die Primärdichtung ein Federelement aufweist. Das Federelement ist vorzugsweise innerhalb des äußeren Dichtelementes angeordnet. Besonders bevorzugt ist es, dass das Federelement derart in Verbindung mit dem Versteifungsring angeordnet ist, dass das Federelement innerhalb des Versteifungsrings, d.h. auf der in Richtung des Innenraums weisenden Seite des Versteifungsrings angeordnet ist. Der Versteifungsring ist in bevorzugter Ausführungsform somit zwischen dem Federelement und dem Querelement des äußeren Dichtelements angeordnet. Vorzugsweise weist das Federelement zwei Federarme auf, die gegen die Seitenelemente des äußeren Dichtelementes drücken. Die Federarme drücken somit vorzugsweise die Seitenelemente des äußeren Dichtelements gegen die Seitenwände der Nut.

Das Federelement weist vorzugsweise einen U-förmigen Querschnitt auf, dessen Öffnung in Richtung des Innenraums der Rohrverbindungsvorrichtung weist.

Nachfolgend wird die Erfindung anhand einer bevorzugten Ausführungsform unter Bezugnahme auf die anliegenden Zeichnungen näher erläutert.

Es zeigen:
- Figur 1: einen schematischen Längsschnitt an einer erfindungsgemäßen Ausführungsform der Druckverbindungsvorrichtung,
- Figur 2: eine Vergrößerung des in Figur 1 mit II bezeichneten Bereichs und
- Figur 3: ein schematischer Querschnitt der Primärdichtung.

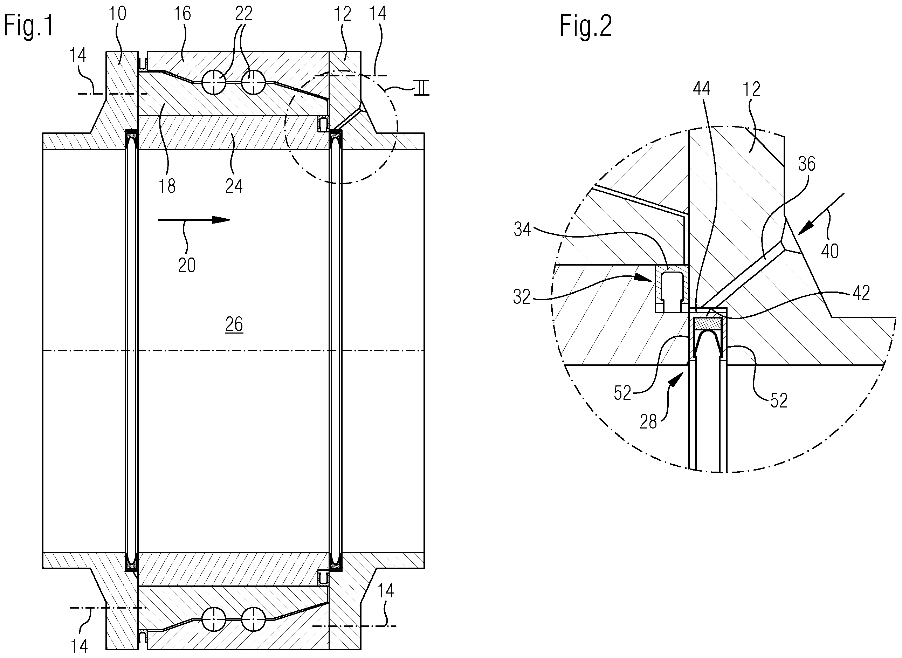

Die Rohrverbindungsvorrichtung weist zwei Verbindungselemente 10, 12 auf. Das in Figur 1 linke Rohrverbindungselement 10 ist im dargestellten Ausführungsbeispiel über eine Schraubverbindung 14 mit einem inneren Lagerelement 16 fest verbunden. Das in Figur 1 rechte Verbindungselement 12 ist ebenfalls über eine Schraubverbindung 14 mit einem äußeren Lagerelement 18 verbunden. Die beiden Lagerelemente 16, 18 überdecken einander in Längsrichtung 20. Zwischen den beiden Lagerelementen 16, 18 sind Kugeln 22 zur Ausbildung eines Lagers angeordnet.

Des Weiteren ist zwischen den beiden Verbindungselementen 10, 12 ein rohrförmiges Innenteil 24 angeordnet. Das rohrförmige Innenteil 24 ist innerhalb der beiden Lagerelemente 16, 18 angeordnet.

Die beiden Verbindungselemente 10, 12 bilden zusammen mit dem Innenteil 24 einen kreiszylinderförmigen Innenraum 26 aus.

Figur 2 zeigt den Bereich, in dem im Wesentlichen die Relativbewegungen auftreten können. In diesem Bereich ist zwischen dem Verbindungselement 12 und dem Innenteil 24 eine umlaufende Nut 28 ausgebildet. Im dargestellten Ausführungsbeispiel ist die umlaufende Nut vollständig innerhalb des Verbindungselements 12 ausgebildet. In der Nut 28 ist eine Primärdichtung 30 angeordnet.

Ferner ist zwischen dem Verbindungselement 12 und dem Innenteil 24 eine Kammer 32 ausgebildet. Innerhalb der Kammer 32 ist eine im Querschnitt U-förmige Sekundärdichtung 34 angeordnet. Die Sekundärdichtung 34 ist derart angeordnet, dass ihre Öffnung in Richtung des Innenraums 26 weist.

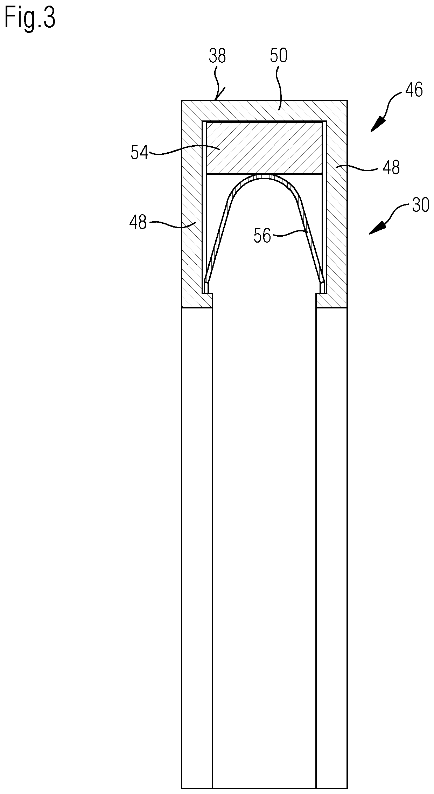

In dem Verbindungselement 12 ist ein Überdruckkanal 36 angeordnet. Der Überdruckkanal 36 ist mit der Nut 28 verbunden. Zur Erzeugung eines Überdrucks auf einer Rückseite bzw. Außenseite 38 (Fig. 3) der Nut wird, wie durch einen Pfeil 40 dargestellt, Gas, wie beispielsweise Stickstoff, über den Überdruckkanal 36 zugeführt. Hierzu ist der Überdruckkanal 36 über eine nicht dargestellte Zuführleitung mit einer ebenfalls nicht dargestellten Druckerzeugungseinrichtung verbunden. Die Druckerzeugungseinrichtung weist einen Gasbehälter auf, in dem entweder ein Gas mit entsprechendem Überdruck vorhanden ist. Ebenso kann beispielsweise eine Pumpe vorgesehen sein, die einen entsprechenden Überdruck erzeugt.

Gegebenenfalls ist die Überdruckerzeugungseinrichtung mit einer nicht dargestellten Steuereinrichtung verbunden, durch die ein dem Überdruckkanal 36 zugeführter Druck des Gases gesteuert werden kann. Dies erfolgt insbesondere in Abhängigkeit des im Innenraum 26 herrschenden Drucks. Dieser ist der Steuereinrichtung bekannt oder wird unmittelbar über einen Sensor gemessen.

Der Überdruckkanal 36 ist insbesondere mit einem Nutgrund 42 der Nut 28 verbunden. Der Nutgrund 42 ist die dem Innenraum 26 gegenüberliegende Wand der Nut 28. Im dargestellten Ausführungsbeispiel ist zwischen der Außenseite 38 der Primärdichtung 30 und dem Nutgrund 42 eine kreisringförmige Kammer 44 ausgebildet.

Im dargestellten Ausführungsbeispiel weist die Primärdichtung 30 ein äußeres Dichtelement 46 auf. Im dargestellten Ausführungsbeispiel weist das äußere Dichtelement 46 zwei einander gegenüberliegende Seitenelemente 48, sowie ein Querelement 50 auf. Das äußere Dichtelement 46 ist im Querschnitt U-förmig ausgebildet, wobei die Öffnung des U's in Richtung des Innenraums 26 weist. Die beiden Seitenelemente 48 liegen an den beiden einander gegenüberliegenden Seitenwänden 52 der Nut 28 an.

Innerhalb des äußeren Dichtelements 46 ist ein umlaufender ringförmiger Versteifungsring 54 angeordnet. Ferner ist innerhalb des äußeren Dichtelements 46 ein im Querschnitt U-förmiges Federelement 56 angeordnet. Die Öffnung des Federelements 56 weist wiederum in Richtung des Innenraums 26.

## Patentansprüche

1. Rohrverbindungsvorrichtung zur Verbindung von Rohren für den Transport von Tieftemperatur-Flüssigkeiten, mit
zwei Verbindungselementen (10, 12) zum Verbinden mit jeweils einem Rohrende,
zwei jeweils mit einem der Verbindungselemente (10, 12) verbundenen Lagerelemente (16, 18), die sich in Längsrichtung (20) teilweise überdecken,
ein zwischen den Lagerelementen (16, 18) angeordnetes Lager (22),
ein von den Lagerelementen (16,18) umgebenes rohrförmiges Innenteil (24), wobei die Verbindungselemente (10, 12) und das Innenteil (24) einen Innenraum (26) ausbilden, durch den die Flüssigkeit gefördert wird,
einer zwischen dem Innenteil (24) und einem der Verbindungselemente (10, 12) vorgesehenen umlaufenden in den Innenraum offenen Nut (28) in der eine Primärdichtung (30) angeordnet ist und
einer zwischen dem Innenteil (24) und einem der Verbindungselemente (12) vorgesehenen umlaufenden geschlossenen Kammer (32), in der eine Sekundärdichtung (34) angeordnet ist,
**dadurch gekennzeichnet, dass**
die Nut (28) mit einem Überdruckkanal (36) verbunden ist und
der Überdruckkanal (36) mit einer Druckerzeugungseinrichtung verbunden ist.

2. Rohrverbindungsvorrichtung nach Anspruch 1, **dadurch gekennzeichnet, dass** der Überdruckkanal (36) mit einem Nutgrund (42) der Nut (28) verbunden ist.

3. Rohrverbindungsvorrichtung nach Anspruch 1 oder 2, **dadurch gekennzeichnet, dass** der Überdruckkanal (36) mit einem Bereich der Nut (28) verbunden ist, in dem eine Außenseite (38) der Primärdichtung (30) angeordnet ist.

4. Rohrverbindungsvorrichtung nach einem der Ansprüche 1 bis 3, **dadurch gekennzeichnet, dass** der Überdruckkanal (36) in einem der Verbindungselemente (12) angeordnet ist.

5. Rohrverbindungsvorrichtung nach einem der Ansprüche 1 bis 4, **dadurch gekennzeichnet, dass** die Primärdichtung (30) ein äußeres Dichtelement (46) aufweist, das an Seitenwänden (52) der Nut (28) anliegt.

6. Rohrverbindungsvorrichtung nach Anspruch 5, **dadurch gekennzeichnet, dass** das äußere Dichtelement (46) im Querschnitt U-förmig ist, wobei zwei Seitenelemente (48) an den Seitenwänden (52) der Nut (28) anliegen und vorzugsweise die zwei Seitenelemente (48) über ein Querelement (50) miteinander verbunden sind.

7. Rohrverbindungsvorrichtung nach Anspruch 6, **dadurch gekennzeichnet, dass** das Querelement (50) die Außenseite (38) der Primärdichtung (30) ausbildet.

8. Rohrverbindungsvorrichtung nach einem der Ansprüche 5 bis 7, **dadurch gekennzeichnet, dass** die Primärdichtung (30) einen innerhalb des äußeren Dichtelements (46) angeordneten Versteifungsring (54) aufweist, der insbesondere umlaufend ausgebildet ist.

9. Rohrverbindungsvorrichtung nach Anspruch 8, **dadurch gekennzeichnet, dass** das der Versteifungsring (54) an einer Innenseite des Querelements (50) anliegt.

10. Rohrverbindungsvorrichtung nach Anspruch 5 bis 9, **dadurch gekennzeichnet, dass** die Primärdichtung ein innerhalb des äußeren Dichtelements (46) angeordnetes Federelement (56) aufweist, dass insbesondere umlaufend ausgebildet ist.

11. Rohrverbindungsvorrichtung nach Anspruch 10, **dadurch gekennzeichnet, dass** das Federelement (56) zwei Federarme aufweist, die gegen die Seitenelemente (48) des äußeren Dichtelements (46) drücken.

12. Rohrverbindungsvorrichtung nach Anspruch 1 bis 11, **dadurch gekennzeichnet, dass** die Primärdichtung (30) und die Sekundärdichtung (34) zwischen dem Innenteil (24) und demselben Verbindungselement (12) angeordnet sind.

13. Rohrverbindungsvorrichtung nach Anspruch 1 bis 12, **dadurch gekennzeichnet, dass** die Primärdichtung (30) und die Sekundärdichtung (34) zwischen dem Innenteil (24) und demjenigen Verbindungelement (12) angeordnet ist, zwischen denen im Betrieb Relativbewegung auftritt.

14. Rohrverbindungsvorrichtung nach Anspruch 1 bis 13, **dadurch gekennzeichnet, dass** zwischen dem Innenteil (24) und dem weiteren Verbindungselement (10) eine zweite umlaufende in den Innenraum (26) offene Nut (28) vorgesehen ist, in der eine weitere Primärdichtung (30) angeordnet ist.

15. Rohrverbindungsvorrichtung nach Anspruch 1 bis 14, **dadurch gekennzeichnet, dass** der Innenraum (26) einen Durchmesser von einen Durchmesser von mehr als 50 mm, insbesondere mehr als 200 mm und besonders bevorzugt mehr als 400 mm aufweist.

16. Rohrverbindungsvorrichtung nach Anspruch 1 bis 15, **dadurch gekennzeichnet, dass** die Druckerzeugungseinrichtung über eine Zuführleitung, die mit dem Überdruckkanal (36) verbunden ist, dem Überdruckkanal (36) Gas zuführt.

17. Rohrverbindungsvorrichtung nach Anspruch 1 bis 16, **dadurch gekennzeichnet, dass** die Druckerzeugungseinrichtung, bezogen auf den Innenraum (26) einen Überdruck, insbesondere auf der Außenseite (38) der Primärdichtung (30) erzeugt.

18. Rohrverbindungsvorrichtung nach Anspruch 1 bis 17, **dadurch gekennzeichnet, dass** die Druckerzeugungseinrichtung einen konstanten Druck erzeugt.

19. Rohrverbindungsvorrichtung nach Anspruch 1 bis 18, **dadurch gekennzeichnet, dass** die Druckerzeugungsrichtung mit einer Steuereinrichtung verbunden ist, die die Druckerzeugungseinrichtung derart steuert, dass ein Überdruck in Abhängigkeit zum Druck im Innenraum (26) automatisch geregelt werden kann.

## Claims

1. A pipe connecting device for connecting pipes for the transport of low-temperature liquids, comprising
two connecting elements (10, 12) for connection to a respective pipe end,
two bearing elements (16, 18) respectively connected to one of the connecting elements (10, 12), which bearing elements partially overlap each other in a longitudinal direction (20),
a bearing (22) arranged between the bearing elements (16, 18),
a tubular interior part (24) surrounded by the bearing elements (16, 18), wherein the connecting elements (10, 12) and the interior part (24) define an interior space (26) through which the liquid is conveyed,
a circumferential groove (28) open towards the interior space and provided between the interior space (24) and one of the connecting elements (10, 12), in which groove a primary seal (30) is arranged, and
a circumferential closed chamber (32) provided between the interior part (24) and one of the connecting elements (12), in which chamber a secondary seal (34) is arranged,
**characterized in that**
the groove (28) is connected to an overpressure channel (36), and
the overpressure channel (36) is connected to a pressure-generating means.

2. The pipe connecting device according to claim 1, **characterized in that** the overpressure channel (36) is connected to a groove bottom (42) of the groove (28).

3. The pipe connecting device according to claim 1 or 2, **characterized in that** the overpressure channel (36) is connected to a region of the groove (28) in which an outside (38) of the primary seal (30) is arranged.

4. The pipe connecting device according to any one of claims 1 to 3, **characterized in that** the overpressure channel (36) is arranged in one of the connecting elements (12).

5. The pipe connecting device according to any one of claims 1 to 4, **characterized in that** the primary seal (30) comprises an exterior sealing element (46) which abuts on side walls (52) of the groove (28).

6. The pipe connecting device according to claim 5, **characterized in that** the exterior sealing element (46) has a U-shaped cross-section, wherein two side elements (48) abut on the side walls (52) of the groove (28) and the two side elements (48) are preferably connected to each other via a transverse element (50).

7. The pipe connecting device according to claim 6, **characterized in that** the transverse element (50) defines the outside (38) of the primary seal (30).

8. The pipe connecting device according to any one of claims 5 to 7, **characterized in that** the primary seal (30) comprises a reinforcing ring (54) arranged inside the exterior sealing element (46), which reinforcing ring is in particular a circumferential ring.

9. The pipe connecting device according to claim 8, **characterized in that** the reinforcing ring (54) abuts on an inside of the transverse element (50).

10. The pipe connecting device according to any one of claims 5 to 9, **characterized in that** the primary seal comprises a spring element (56) arranged inside the exterior sealing element (46), which spring element is in particular a circumferential spring element.

11. The pipe connecting device according to claim 10, **characterized in that** the spring element (56) comprises two spring arms which press against the side elements (48) of the exterior sealing element (46).

12. The pipe connecting device according to claim 1 to 11, **characterized in that** the primary seal (30) and the secondary seal (34) are arranged between the interior part (24) and the same connecting element (12).

13. The pipe connecting device according to claim 1 to 12, **characterized in that** the primary seal (30) and the secondary seal (34) are arranged between the interior part (24) and the connecting element (12) between which a relative movement occurs during operation.

14. The pipe connecting device according to claim 1 to 13, **characterized in that** between the interior part (24) and the other connecting element (10), a second circumferential groove (28) open towards the interior space (26) is provided, in which groove another primary seal (30) is arranged.

15. The pipe connecting device according to claim 1 to 14, **characterized in that** the interior space (26) has a diameter of a diameter of more than 50 mm, in particular more than 200 mm, and particularly preferably more than 400 mm.

16. The pipe connecting device according to claim 1 to 15, **characterized in that** the pressure-generating means supplies gas to the overpressure channel (36) via a supply line connected to the overpressure channel (36).

17. The pipe connecting device according to claim 1 to 16, **characterized in that** the pressure-generating means generates an overpressure, relative to the interior space (26), in particular on the outside (38) of the primary seal (30).

18. The pipe connecting device according to claim 1 to 17, **characterized in that** the pressure-generating means generates a constant pressure.

19. The pipe connecting device according to claim 1 to 18, **characterized in that** the pressure-generating means is connected to a controller which controls the pressure-generating means such that an overpressure can be automatically controlled depending on the pressure in the interior space (26).

## Revendications

1. Dispositif de raccordement de tuyaux destiné au raccordement de tuyaux pour le transport de liquides à basse température, comprenant
deux éléments de raccordement (10, 12) destinés au raccordement à une extrémité de tuyau respective,
deux éléments de support (16, 18), chacun étant attaché à un élément respectif des éléments de raccordement (10, 12) qui se chevauchent partiellement dans la direction longitudinale (20),
un support (22) disposé entre les éléments de support (16, 18),
une partie intérieure tubulaire (24) entourée des éléments de support (16, 18), les éléments de raccordement (10, 12) et la partie intérieure (24) formant un espace intérieur (26) par lequel le liquide est transporté,
une rainure (28) périphérique prévue entre la partie intérieure (24) et un des éléments de raccordement (10, 12) et ouverte vers l'espace intérieur, dans laquelle rainure un joint primaire (30) est disposé et
une chambre (32) périphérique fermée prévue entre la partie intérieure (24) et un des éléments de raccordement (12), dans laquelle chambre un joint secondaire (34) est disposé,
**caractérisé en ce que**
la rainure (28) est raccordée à un canal de surpression (36) et **en ce que** le canal de surpression (36) est raccordé à un dispositif générateur de pression.

2. Dispositif de raccordement de tuyaux selon la revendication 1, **caractérisé en ce que** le canal de surpression (36) est raccordé à un fond de rainure (42) de la rainure (28).

3. Dispositif de raccordement de tuyaux selon la revendication 1 ou 2, **caractérisé en ce que** le canal de surpression (36) est raccordé à une zone de la rainure (28), dans laquelle zone un côté extérieur (38) du joint primaire (30) est disposé.

4. Dispositif de raccordement de tuyaux selon l'une des revendications 1 à 3, **caractérisé en ce que** le canal de surpression (36) est disposé dans un des éléments de raccordement (12).

5. Dispositif de raccordement de tuyaux selon l'une des revendications 1 à 4, **caractérisé en ce que** le joint primaire (30) comprend un élément d'étanchéité extérieur (46) qui est en appui sur des parois latérales (52) de la rainure (28).

6. Dispositif de raccordement de tuyaux selon la revendication 5, **caractérisé en ce que** l'élément d'étanchéité extérieur (46) a une section transversale à la forme d'un U, deux éléments latéraux (48) étant en appui sur les parois latérales (52) de la rainure (28) et, de préférence, les deux éléments latéraux (48) sont raccordés l'un à l'autre par un élément transversal (50).

7. Dispositif de raccordement de tuyaux selon la revendication 6, **caractérisé en ce que** l'élément transversal (50) constitue la partie extérieure (38) du joint primaire (30).

8. Dispositif de raccordement de tuyaux selon l'une des revendications 5 à 7, **caractérisé en ce que** le joint primaire (30) comprend un anneau raidisseur (54) disposé à l'intérieur de l'élément d'étanchéité extérieur (46) et qui est notamment de forme périphérique.

9. Dispositif de raccordement de tuyaux selon la revendication 8, **caractérisé en ce que** l'anneau raidisseur (54) est en appui sur un côté intérieur de l'élément transversal (50).

10. Dispositif de raccordement de tuyaux selon l'une des revendications 5 à 9, **caractérisé en ce que** le joint primaire comprend un élément ressort (56) disposé à l'intérieur de l'élément d'étanchéité extérieur (46) et qui est notamment de forme périphérique.

11. Dispositif de raccordement de tuyaux selon la revendication 10, **caractérisé en ce que** l'élément ressort (56) comprend deux bras de ressort qui font pression sur les éléments latéraux (48) de l'élément d'étanchéité extérieur (46).

12. Dispositif de raccordement de tuyaux selon l'une des revendications 1 à 11, **caractérisé en ce que** le joint primaire (30) et le joint secondaire (34) sont disposés entre la partie intérieure (24) et le même élément de raccordement (12).

13. Dispositif de raccordement de tuyau selon les revendications 1 à 12, **caractérisé en ce que** le joint primaire (30) et le joint secondaire (34) sont disposés entre la partie intérieure (24) et celui des éléments de raccordement (12) entre lesquels se produit un mouvement relatif lorsque le dispositif est en marche.

14. Dispositif de raccordement de tuyau selon les revendications 1 à 13, **caractérisé en ce qu'**il est prévu, entre la partie intérieure (24) et l'autre élément de raccordement (10), une deuxième rainure (28) périphérique et ouverte vers l'espace intérieur (26) dans laquelle une autre rainure primaire (30) est disposée.

15. Dispositif de raccordement de tuyau selon les revendications 1 à 14, **caractérisé en ce que** l'espace intérieur (26) a un diamètre de plus de 50 mm, en particulier de plus de 200 mm et, de manière particulièrement préférée, de plus de 400 mm.

16. Dispositif de raccordement de tuyau selon les revendications 1 à 15, **caractérisé en ce que** le dispositif de génération de pression apporte du gaz au canal de surpression (36) par un conduit d'admission qui est raccordé au canal de surpression (36).

17. Dispositif de raccordement de tuyau selon les revendications 1 à 16, **caractérisé en ce que** le dispositif de génération de pression produit, par rapport à l'espace intérieur (26), une surpression, en particulier sur la partie extérieure (38) du joint primaire (30).

18. Dispositif de raccordement de tuyau selon les revendications 1 à 17, **caractérisé en ce que** le dispositif de génération de pression produit une pression constante.

19. Dispositif de raccordement de tuyau selon les revendications 1 à 18, **caractérisé en ce que** le dispositif de génération de pression est raccordé à un dispositif de commande qui commande le dispositif de génération de pression de manière telle qu'une surpression puisse être réglée de façon automatique en fonction de la pression dans l'espace intérieur (26).
